# EUROPÄISCHE PATENTSCHRIFT

(11) **EP 4 019 434 B1**
(45) Veröffentlichungstag und Bekanntmachung des Hinweises auf die Patenterteilung: **16.04.2025**
(21) Anmeldenummer: 21207153.4
(22) Anmeldetag: 09.11.2021
(51) Int. Cl.: B65G 7/12

(54) **TRANSPORTHÜLLE UND TRANSPORTVORRICHTUNG**
TRANSPORT SLEEVE AND TRANSPORTING DEVICE
ENVELOPPE DE TRANSPORT ET DISPOSITIF DE TRANSPORT

(30) Priorität: 15.12.2020 DE 102020133590
(43) Veröffentlichungstag der Anmeldung: 29.06.2022
(73) Patentinhaber: Tattermann, Patrick, 30455 Hannover (DE)
(72) Erfinder: Tattermann, Patrick, 30455 Hannover (DE)
(74) Vertreter: Scheffler, Jörg

(56) Entgegenhaltungen:
- DE-U- 1 786 387
- US-A1- 2002 148 866
- US-B1- 10 427 874

## Beschreibung

Die Erfindung betrifft eine Transporthülle, insbesondere für Haushaltsgeräte, aufweisend eine Haube, wobei die Haube eine Deckfläche aufweist, wobei die Deckfläche mit Seitenflächen verbunden ist und die Seitenflächen miteinander verbunden sind.

Im Stand der Technik sind vielfältige Transporthüllen und Transportvorrichtungen bekannt, mit denen Güter oder Waren per Hand beziehungsweise zu Fuß transportiert werden können. Die Transportvorrichtungen sind je nach Verwendungszweck sehr unterschiedlich ausgestaltet. So sind zum Beispiel einachsige und zweiachsige Transportvorrichtungen im Einsatz. Typische Transportvorrichtungen für größere und schwere Gegenstände, wie die als "Weiße Ware" bekannten Haushaltsgeräte, also beispielweise Kühlschränke, Waschmaschinen oder Geschirrspüler, sind Sackkarren und Plattformwagen oder auch Tragegurtsysteme.

Bei beengten Verhältnissen oder beim Überwinden von Absätzen, Stufen oder Treppen haben sich Transportvorrichtungen mit Rädern als nachteilig herausgestellt, so dass bei beengten Verhältnissen Tragegurtsysteme mit beispielsweise Kreuztragegurten Verwendung finden. Typischerweise werden zwei Kreuztragegurte mittels eines Zugmittels miteinander verbunden, wobei das Transportgut auf dem Zugmittel aufliegt. Das Transportgut ist durch die Tragenden im Gleichgewicht zu halten. Des Weiteren müssen die Tragenden aufgrund des starken horizontalen Zugs das Transportgut von sich wegdrücken, um Abstand zum Transportgut zu gewinnen, sodass Platz zum Gehen geschaffen wird. Dies ist bereits beim Transport in der Ebene unergonomisch und kräftezehrend. Beim Überwinden von Treppen wird das Positionieren des Transportguts auf dem Zugmittel durch den Höhenunterschied, auf dem sich die Tragenden befinden, weiter erschwert; ein Treppabkippen des Transportguts muss mit einem hohen Kraftaufwand verhindert werden.

Beim Transport bei beengten Verhältnissen, was häufig auch auf Treppen gegeben ist, tritt des Weiteren die Gefahr auf, dass das Transportgut durch Kollisionen beschädigt wird. Wird das Transportgut zum Schutz vor Kollisionen zusätzlich verpackt, führt dies zu einem erhöhten Aufwand und zu einem verstärkten Verrutschen des Transportguts auf dem Zugmittel sowie zu einer schlechteren Greifbarkeit des Transportguts. Insbesondere für Waren, die meist sehr ähnliche Abmaße haben, wie zum Beispiel die als "Weiße Ware" bekannten Geräte, bieten sich daher wiederverwendbare Transporthüllen an, die an die typischen Maße dieser Geräte angepasst sind und einen erleichterten Transport ermöglichen.

Eine Schutzverpackung insbesondere für ein Haushaltgerät beschreibt die DE 10 2007 059 232 B4, die vier schwenkbeweglich miteinander verbundene Seitenwände aufweist. Durch taschenartige Aufnahmen in den Seitenwänden können plattenförmige Polsterungselemente aufgenommen werden, sodass ein einfaches und sicheres Verpacken ermöglicht wird.

Die DE 20 2011 051 380 U1 offenbart eine Transporthülle für sehr große Gegenstände, die an die Kontur des Transportguts angepasst ist und aus einem festen Vlies besteht. Die Transporthülle wird über das Transportgut gefügt und mit Bändern oder Schnüren an diesem befestigt. Bevorzugt weist die Transporthülle Tragemittel auf, die aus Öffnungen zum Hineingreifen in die Transporthülle bestehen können oder aus aufgesetzten Griffen oder Tragegurten bestehen.

Aus der JP 6 312 900 B1 ist eine Transportvorrichtung mit Deck- und Seitenflächen bekannt, bei der paarweise angeordnete Bodenstützen oder Kantenprofile vorgesehen sind, die Öffnungen zum Anbringen eines Tragegurtsystems aufweisen. Hierzu ist die Transportvorrichtung als ein Formkörper mit der äußeren Form eines rechteckigen Parallelepipeds ausgeführt.

Die US 2002/ 0 158 866 A1 zeigt ein Tragesystem, beispielsweise zum Transport von Haushaltsgeräten, welches mit einem Hakensystem zur Fixierung an der Traglast ausgestattet ist. Es können auch Hebegurte vorgesehen sein, die unter der Traglast hindurchgeführt sind bzw. diese umfangs- und unterseitig umschlingen.

Der in der US 2017 / 0 215 560 A1 angegebene Stand der Technik offenbart einen unter der Traglast durchgeführten Tragegurt, der an beiden Seiten der Traglast mit einem Tragesystem einer jeweiligen Hilfsperson verbunden ist.

Auch die EP 1 361 180 A1 beschreibt einen bandförmigen Hebegurt mit jeweils einem Griff an gegenüberliegenden Seiten der Traglast, der auch in der Verpackung der Traglast aufgenommen sein kann.

Durch die US 10 427 874 B1 wird ein System zum Tragen von schweren Gegenständen offenbart, welches die Merkmale des Oberbegriffs des Anspruchs 1 aufweist.

Der Erfindung liegt die Aufgabe zugrunde, eine Möglichkeit zu schaffen, eine Transporthülle sowie eine Transportvorrichtung zu schaffen, welche einfach am Transportgut, insbesondere an "Weißer Ware", angebracht werden können und ein besonders einfaches Transportieren des Transportguts ermöglichen, wobei sie trotz eines geringen Volumens das Transportgut vor Beschädigungen schützen.

Diese Aufgabe wird erfindungsgemäß mit einer Transporthülle gemäß den Merkmalen des Anspruchs 1 gelöst sowie mit einer Transportvorrichtung gemäß den Merkmalen des nebengeordneten Anspruchs. Die weitere Ausgestaltung der Erfindung ist den Unteransprüchen zu entnehmen.

Erfindungsgemäß ist also eine Transporthülle mit einer Haube vorgesehen, wobei die Haube eine Deckfläche aufweist. Die Deckfläche ist mit Seitenflächen verbunden, wobei die insbesondere vier Seitenflächen wiederum miteinander verbunden sind. Zumindest eine der Seitenflächen weist an dem der Deckfläche abgewandten Ende eine Lasche auf, wobei an der Seitenfläche und/oder an der Lasche zum Anbringen eines Tragegurtsystems zumindest ein Zugmittel befestigt ist, wobei das Tragegurtsystem beispielsweise einen Haltegriff, eine Hand- oder eine Tragschlaufe aufweisen kann. Die Deckfläche, die Seitenflächen sowie die Lasche bestehen bevorzugt aus einem Gewebe oder einem Kunststoff, wie zum Beispiel PVC. Eine Verbindung der Deckfläche mit den Seitenflächen sowie ein Verbinden der Seitenflächen miteinander kann über die gesamte Verbindungslinie ausgeführt sein, wie es beispielsweise beim Vernähen von Geweben oder Verschweißen von Kunststoffen üblich ist. In gleicher Weise kann die Lasche an den Seitenflächen befestigt sein, aber auch einteilig mit den Seitenflächen ausgeführt sein. Unter Zugmittel wird ein Bauteil verstanden, das zur Übertragung von Zugkräften geeignet ist, wie zum Beispiel ein Gurt, ein Riemen, ein Band oder ein geeignetes Textil.

Eine über das Transportgut gestülpte Haube bietet gegen ein Verrutschen oder Verdrehen relativ zum Transportgut einen Widerstand, sodass erfindungsgemäß ein Zugmittel, das zumindest mit einer Seitenfläche der Haube und/oder der Lasche verbunden ist, gegen ein Verrutschen und Verdrehen relativ zum Transportgut gesichert ist. Wird mittels des Zugmittels ein Tragegurtsystem an der Transporthülle befestigt, ist durch die mittelbare rutschsichere Befestigung des Zugmittels am Transportgut ein besonders einfacher und sicherer Transport des Transportguts möglich. Da ein händisches Fixieren des Transportguts auf dem Zugmittel nicht notwendig ist, kann das Transportgut verschiedenartig auf dem Zugmittel ausgerichtet werden, sodass ein Gehen, insbesondere auf Treppen oder Schrägen, erleichtert wird.

Die Haube bedeckt die Seitenflächen sowie die Deckfläche des Transportguts, sodass das Transportgut gegen Beschädigungen geschützt ist. Die Unterseite des Transportguts wird durch die Lasche, die sich zumindest über den größten Teil der Unterseite erstreckt und bis zur gegenüberliegenden Seitenfläche ragt, zumindest zu Teilbereichen geschützt. Eine Seitenfläche kann eine Aussparung insbesondere im oberen Bereich aufweisen, sodass beispielsweise eine Produktbezeichnung ersichtlich bleibt.

Erfindungsgemäß wird der Einsatz einer Haube aus einem flexiblen Gewebe, einem Vlies oder einer Folie durch die Übertragung der Zugkraft zum Spannen und Fixieren der Haube am Transportgut bzw. gegen das Transportgut überhaupt erst möglich. Dadurch erhält die konturlose Haube durch das Verspannen gegen das Transportgut die notwendige Formstabilität, die das Tragen mittels des Tragegurts ermöglicht.

Dabei ist hervorzuheben, dass vor allem die Halteschlaufen als Teil der straff gespannten Haube in der relativen Position gegenüber der Traglast fixiert sind und daher bei der Bedienung die vorteilhaften Eigenschaften aufweisen, vergleichbar mit unmittelbar an der Traglast fixierten Haltemitteln, sodass insbesondere eine unerwünschte Verlagerung gegenüber der Traglast vermieden wird, die zu einer schwankenden oder pendelnden Traglast führt.

Es ist leicht verständlich, dass eine sackartige Hülle, selbst wenn die Abmessungen an das Transportgut angepasst sind, ein ergonomisch sinnvolles oder praxisgerechtes Tragen nahezu unmöglich macht.

Erfindungsgemäß ist es auf eine scheinbar verblüffend einfache Weise erreicht worden, bei einer an sich konturlosen, flexiblen Hülle durch das Verspannen gegen die Traglast mittels der beim Heben wirkenden Zugkräfte eine temporäre starre Einheit zu schaffen, sodass auch die Halteschlaufen und Vorrichtungen zum Anbringen des Tragegurtsystems vorübergehend jeweils ein der Traglast unbeweglich zugeordnetes Element mit erheblichen Vorteilen bei der Handhabung der Traglast bilden.

Des Weiteren ist eine Transportvorrichtung mit einer erfindungsgemäßen Transporthülle vorgesehen, wobei die Transportvorrichtung ein Tragegurtsystem aufweist und das Tragegurtsystem insbesondere zwei Tragegurte aufweist, die bevorzugt jeweils zumindest zwei voneinander beabstandete Verbindungselemente zum Verbinden mit den Vorrichtungen der Transporthülle aufweisen. Die Transportvorrichtung ist besonders einfach anzubringen und ermöglicht einen besonders einfachen und sicheren Transport eines Transportguts. Eine bevorzugte Ausführungsform weist eine Transporthülle auf, an der zumindest ein Zugmittel längs und quer zur Zugrichtung fixiert ist und das zumindest an einem Ende zwei zueinander beabstandete Vorrichtungen zur Aufnahme von Tragegurten aufweist sowie bevorzugt zumindest an einem Ende zumindest eine Halteschlaufe 13 zum einfachen händischen Aufnehmen der Last. Durch das Fixieren des Zugmittels längs und quer zur Zugrichtung wird eine Bewegung des Transportguts zum Zugmittel wirkungsvoll unterbunden. Durch zwei voneinander beabstandete Vorrichtungen zur Aufnahme der Tragegurte wird ein Verdrehen oder Verkippen des Transportguts samt Zugmittel verhindert. Die Kräfte werden durch zwei seitlich versetzte Punkte mittels des Tragegurtsystems in die Tragenden geleitet, was einer Rotation des Transportguts um das Zugmittel herum entgegenwirkt.

Erfindungsgemäß erstrecken sich die Lasche, optional auch das Zugmittel, in Zugrichtung des Zugmittels von einer Seitenfläche zur gegenüberliegenden Seitenfläche. Hierdurch wird durch die Zugkraft des Zugmittels beim Tragen des Transportguts die Haube gespannt und am Transportgut gegen ein Verrutschen fixiert. Eine bevorzugte Ausführungsform weist ein Spannelement auf, das an seinem freien Ende Vorrichtungen zur Aufnahme eines Tragegurtsystems aufweist. Das zumindest eine Spannelement, das beispielweise ein Gurt, Riemen oder Seil sein kann, verläuft durch das zumindest eine an der Lasche befestigte Spannmittel, wobei das Spannmittel bevorzugt an dem freien Ende der Lasche befestigt ist. Das Spannelement ist an der Haube, beispielsweise an den an der gegenüberliegenden Seitenfläche befestigten Vorrichtungen, befestigt und verläuft entgegen der Richtung des Zugmittels zum Spannmittel, also beispielweise von den Vorrichtungen über die Deckfläche zu dem Spannmittel. Wird das Transportgut an der oder den Vorrichtungen des oder der Spannelemente angehoben, wird eine hohe Zugkraft in der Haube erzeugt, sodass die Haube um das Transportgut verspannt wird und ein Verrutschen des Transportguts in der Haube besonders effektiv vermieden wird.

Eine besonders praxisrelevante Ausführungsform sieht ein Zugmittel vor, das zumindest aus zwei Einzelzugmitteln, wie beispielweise Gurten, besteht, die zueinander beabstandet sind. Hierdurch wird in besonders einfacher Weise mittels bekanntet Zugmittel, wie Gurten oder Riemen, das erfindungsgemäße Zugmittel realisiert.

Eine bevorzugte Ausführungsform weist eine Lasche und/oder ein Zugmittel auf, die Befestigungsmittel zum Befestigen der Lasche und/oder des Zugmittels an einer Seitenfläche aufweisen, wobei die Befestigungsmittel überwiegend Kräfte quer zur Zugrichtung der Zugmittel aufnehmen. Durch die Befestigungsmittel wird ein Verrutschen der Lasche oder des Zugmittels relativ zur Haube und somit zum Transportgut vermieden. Ein besonders einfacher und sicherer Transport wird damit gewährleistet.

In einer weiteren, ebenfalls besonders zweckmäßigen Ausführungsform weist zumindest eine Seitenfläche und/oder die Deckfläche eine Polsterung auf. Hierdurch wird ein erhöhter Schutz des Transportguts vor Beschädigungen ermöglicht.

Besonders bevorzugt ist es, wenn die Seitenflächen und/oder die Deckfläche Aufnahmen, insbesondere Taschen, zur entnehmbaren Aufnahme der Polsterung aufweisen. Hierdurch kann die Haube besonders einfach über das Transportgut gestülpt und die Polsterung nur bei Bedarf angebracht werden. Eine besonders platzsparende Lagerung der Transporthülle wird ebenso wie eine getrennte Reinigung der Hülle und der Polsterung ermöglicht.

Alternativ ist die Polsterung dauerhaft mit den Seitenflächen und/oder der Deckfläche verbunden, beispielweise durch Nähen, Schrauben, Nieten oder Kleben. Hierdurch wird eine besonders kostengünstige Fertigung der Transporthülle ermöglicht.

Es hat sich als vorteilhaft herausgestellt, wenn die Polsterung plattenförmig ist und beispielweise eine Korkplatte, eine Gummiplatte oder eine Leichtschaumstoffplatte, wie zum Beispiel eine Polyurethanschaumkernplatte mit Deckschichten, ist. Hierdurch lässt sich die Polsterung besonders einfach in einer Aufnahme positionieren oder aber dauerhaft an der Hülle befestigen und ist hierbei besonders kompakt gestaltet.

Die Erfindung lässt verschiedene Ausführungsformen zu. Zur weiteren Verdeutlichung ihres Grundprinzips sind zwei davon in den Zeichnungen dargestellt und werden nachfolgend beschrieben. Diese zeigen in
Fig. 1 eine Ansicht der Transporthülle von schräg vorne;
Fig. 2 eine Ansicht der Transporthülle mit Zugmitteln;
Fig. 3 eine weitere Ansicht der Transporthülle;
Fig. 4 eine Seitenansicht der Transportvorrichtung.

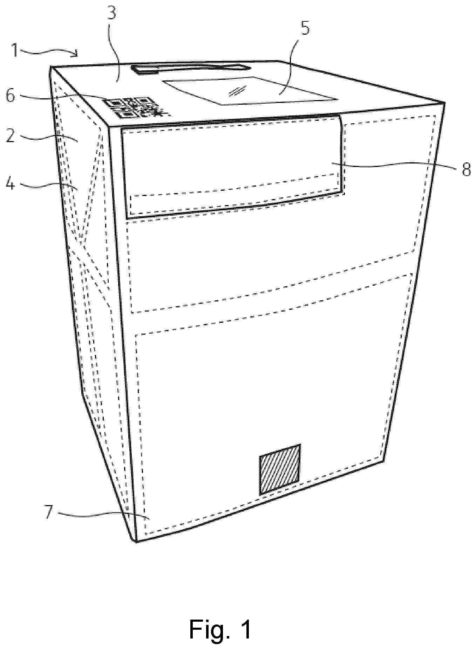

Eine erfindungsgemäße Transporthülle 1 aufweisend eine Haube 2 bestehend aus einer Deckfläche 3 und vier Seitenflächen 4, die an dem umlaufenden Rand der Deckfläche 3 befestigt sind, ist in Figur 1 dargestellt. Die Haube 2 besteht aus einem beständigen Gewebe, einem Vlies oder einem Kunststoff. Die Deckfläche 3 weist eine transparente Hülle 5 zur Aufnahme von Papieren sowie einen QR-Code 6 zur Verlinkung zu einer Anleitung wie einem Video auf. Die Deckfläche 3 weist auf ihrer Innenseite eine angenähte plattenförmige Polsterung 7 auf.

Die Seitenflächen 4 weisen ebenfalls angenähte plattenförmige Polsterungen 7 auf. Eine Seitenfläche 4 weist im oberen Bereich eine Aussparung 8 auf, so dass das Transportgut ersichtlich ist.

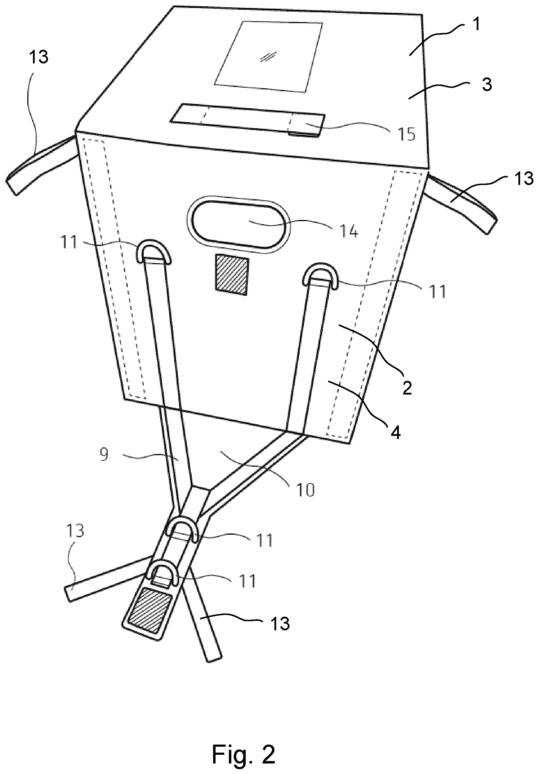

In Figur 2 ist eine Rückansicht der Transporthülle mit zwei Zugmitteln 9 dargestellt. Die Zugmittel 9 sind am oberen Ende voneinander beabstandet und verlaufen entlang einer Seitenfläche 4 und entlang einer Lasche 10. Im unteren Bereich laufen die Zugmittel 9 zusammen. Die Zugmittel 9 sind über ihre Länge mit der Seitenfläche 4 und der Lasche 10 vernäht. Die Zugmittel 9 weisen am Ende zwei Vorrichtungen 11 zur Aufnahme eines Tragegurtsystems 17 auf, die vorliegend als D-Ringe ausgeführt sind. Für einen Transport in der Ebene kann somit die als ein D-Ring ausgeführte Vorrichtung 11 und zum Transport in der Ebene die als zweiter D-Ring ausgeführte Vorrichtung 11 verwendet werden. An den Zugmitteln 9 sind des Weiteren Schlaufen 13 vorgesehen, an denen der Tragende die Last bei Bedarf mit den Händen aufnehmen kann. Die rückseitige Seitenfläche 4 weist im oberen Bereich eine Schlauchdurchführung 14 auf, durch die Komponenten des Transportguts, wie zum Beispiel Kabel oder Schläuche, aus der Haube 2 herausgeführt werden können. Die Kabel oder Schläuche können mit der Schlauchhalterung 15 fixiert werden. Im dargestellten Zustand ist die Haube 2 über das Transportgut gestülpt. Vor Transportbeginn ist die Lasche 10 unter dem Transportgut durchzuführen.

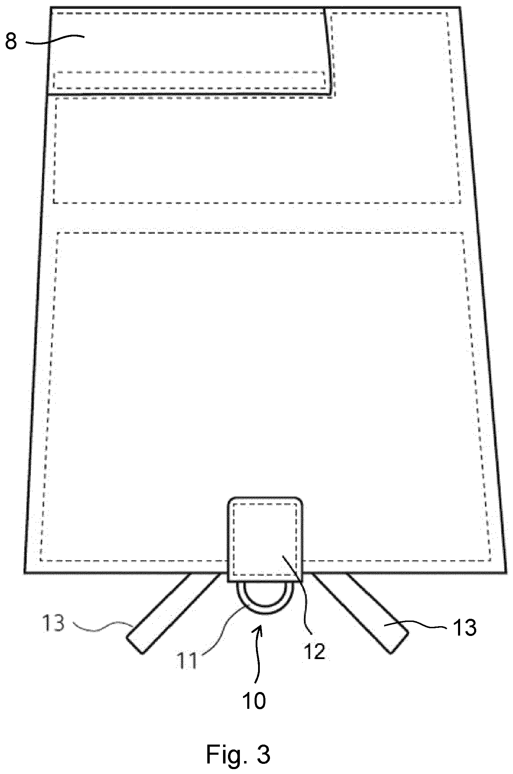

Figur 3 stellt die Lasche 10 im unter dem Transportgut durchgeführten Zustand dar. Die Lasche 10 ist mittels eines Befestigungsmittels 12, das als Klettband ausgeführt ist, an einer Seitenfläche 4 befestigt.

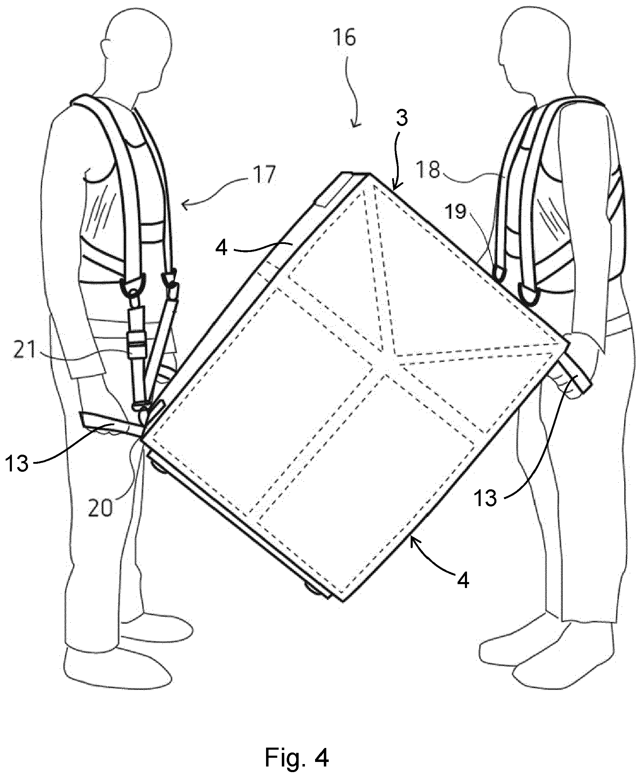

In Figur 4 ist eine Transportvorrichtung 16 dargestellt, die aus der Transporthülle 1 und einem Tragegurtsystem 17 besteht. Das Tragegurtsystem 17 besteht aus zwei Tragegurten 18, wobei der rechts dargestellte Tragegurt 18 zwei seitlich zueinander beabstandete Verbindungselemente 19 in Form von Haken zum Verbinden mit den Vorrichtungen 11 aufweist. Der rechte Tragegurt 18 nimmt die Last des Transportguts seitlich auf und leitet die Last auf derselben Seite auf den Tragenden weiter, sodass der Kraftfluss zu einer Stabilisierung des Transportguts in seiner vorgesehenen Lage führt.

### BEZUGSZEICHENLISTE

| | | | |
|---|---|---|---|
| 1 | Transporthülle | 16 | Transportvorrichtung |
| 2 | Haube | 17 | Tragegurtsystem |
| 3 | Deckfläche | 18 | Tragegurt |
| 4 | Seitenflächen | 19 | Verbindungselement |
| 5 | Hülle | 20 | Spannelement |
| 6 | QR-Code | 21 | Spannmittel |
| 7 | Polsterung | | |
| 8 | Aussparung | | |
| 9 | Zugmittel | | |
| 10 | Lasche | | |
| 11 | Vorrichtung | | |
| 12 | Befestigungsmittel | | |
| 13 | Halteschlaufen | | |
| 14 | Schlauchdurchführung | | |
| 15 | Schlauchhalterung | | |

## Patentansprüche

1. Transporthülle (1), insbesondere für Haushaltsgeräte, aufweisend eine Haube (2), wobei die Haube (2) eine Deckfläche (3) aufweist, wobei die Deckfläche (3) mit Seitenflächen (4) verbunden ist und die Seitenflächen (4) miteinander verbunden sind, wobei zumindest eine Seitenfläche (4) an dem der Deckfläche (3) gegenüberliegenden Ende zumindest eine Lasche (10) aufweist, wobei an der Seitenfläche (4) und/oder an der Lasche (10) zumindest ein Zugmittel (9) insbesondere zum Anbringen eines Tragegurtsystems (17) und/oder mit einer Halteschlaufe (13) befestigt ist, wobei sich die Lasche (10) in Zugrichtung des zumindest einen Zugmittels (9) von einer Seitenfläche (4) zur gegenüberliegenden Seitenfläche (4) zumindest über den größten Teil der Unterseite erstreckt und bis zur gegenüberliegenden Seitenfläche (4) ragt und die Haube (2) und die Lasche (10) zumindest abschnittsweise flexibel ausgeführt sind, **dadurch gekennzeichnet, dass** die Haube (2) über das Transportgut stülpbar ist und zum Transport die Lasche (10) unter dem Transportgut durchführbar ist, sodass sich die Lasche (10) und das Zugmittel (9) in Zugrichtung des Zugmittels (9) von einer Seitenfläche (4) zur gegenüberliegenden Seitenfläche (4) erstrecken und durch die Zugkraft des Zugmittels (9) beim Tragen des Transportguts die Haube (2) gespannt sowie gegenüber dem Transportgut vorgespannt und am Transportgut gegen ein Verrutschen fixiert ist.

2. Transporthülle (1) nach Anspruch 1, **dadurch gekennzeichnet, dass** das zumindest ein Zugmittel (9) längs und quer zur Zugrichtung fixiert ist und zumindest an einem Ende zwei zueinander beabstandete Vorrichtungen (11) zur Aufnahme eines Tragegurtsystems (17) und bevorzugt zumindest eine Halteschlaufe (13) aufweist.

3. Transporthülle (1) nach zumindest einem der vorhergehenden Ansprüche, **dadurch gekennzeichnet, dass** ein Spannelement (20) Vorrichtungen (11) zur Aufnahme eines Tragegurtsystems (17) aufweist, wobei das Spannelement (20) durch an der Lasche (10) befestigte Spannmittel (21) verläuft und an der Haube (2), insbesondere an den an der gegenüberliegenden Seitenfläche (4) befestigten Vorrichtungen (11), befestigt ist und entgegen der Richtung des Zugmittels (9) zum Spannmittel (21) verläuft.

4. Transporthülle (1) nach zumindest einem der vorhergehenden Ansprüche, **dadurch gekennzeichnet, dass** das Zugmittel (9) zumindest aus zwei Einzelzugmitteln besteht, die zueinander beabstandet sind.

5. Transporthülle (1) nach zumindest einem der vorhergehenden Ansprüche, **dadurch gekennzeichnet, dass** die Lasche (10) und/oder das Zugmittel (9) Befestigungsmittel (12) zum Befestigen der Lasche (10) und/oder des Zugmittels (9) an einer Seitenfläche (4) aufweisen, wobei die Befestigungsmittel (12) überwiegend Kräfte quer zur Zugrichtung des Zugmittels (9) aufnehmen.

6. Transporthülle (1) nach zumindest einem der vorhergehenden Ansprüche, **dadurch gekennzeichnet, dass** zumindest eine Seitenfläche (4), insbesondere alle Seitenflächen (4), und/oder die Deckfläche (3) eine Polsterung (7) aufweisen, wobei die Polsterung (7) bevorzugt plattenförmig ist und insbesondere eine Korkplatte, eine Gummiplatte oder eine Leichtschaumstoffplatte ist.

7. Transporthülle (1) nach Anspruch 6, **dadurch gekennzeichnet, dass** die Seitenflächen (4) und/oder die Deckfläche (3) Aufnahmen, insbesondere Taschen, zur entnehmbaren Aufnahme der Polsterung (7) aufweisen.

8. Transporthülle (1) Anspruch 6, **dadurch gekennzeichnet, dass** die Polsterung (7) dauerhaft mit den Seitenflächen (4) und/oder der Deckfläche (3) verbunden ist, insbesondere durch Nähen.

9. Transporthülle (1) nach zumindest einem der Ansprüche 1 bis 6, **dadurch gekennzeichnet, dass** die Haube (2) aufgrund der Zugkraft des Zugmittels (9) beim Tragen des Transportguts reversibel verformt und gegenüber dem Transportgut vorgespannt ist.

10. Transporthülle (1) nach zumindest einem der Ansprüche 1 bis 6, **dadurch gekennzeichnet, dass** die Haube (2) und/oder die Lasche (10) aus einem Gewebe, Gewirke, Gestricke und/oder einer Folie bestehen.

11. Transportvorrichtung (16) mit einer Transporthülle (1) nach zumindest einem der vorhergehenden Ansprüche, **dadurch gekennzeichnet, dass** die Transportvorrichtung (16) ein Tragegurtsystem (17) aufweist, wobei das Tragegurtsystem (17) insbesondere zwei Tragegurte (18) aufweist, wobei zumindest ein Tragegurt (18) bevorzugt zumindest zwei voneinander beabstandete Verbindungselemente (19) zum Verbinden mit den Vorrichtungen (11) der Transporthülle (1) aufweist.

## Claims

1. Transport sleeve (1), in particular for domestic appliances, having a hood (2), wherein the hood (2) has a cover face (3), wherein the cover face (3) is connected to lateral faces (4) and the lateral faces (4) are connected to one another; wherein at least one lateral face (4) has at least one link (10) on the end opposite the cover face (3); wherein at least one traction means (9), in particular for attaching a harness system (17) and/or having a retaining loop (13), is fastened to the lateral face (4) and/or to the link (10); wherein the link (10) extends in the pulling direction of the at least one traction means (9) from one lateral face (4) to the opposite lateral face (4) at least by way of the largest part of the lower side, and protrudes up to the opposite lateral face (4), and the hood (2) and the link (10) are at least in portions embodied to be flexible, **characterized in that** the hood (2) is able to be inverted over the goods to be transported, and for transport the link (10) is able to be guided below the goods to be transported in such a way that the link (10) and the traction means (9) extend in the pulling direction of the traction means (9) from one lateral face (4) to the opposite lateral face (4) and, due to the tensile force of the traction means (9) when carrying the goods to be transported, the hood (2) is tensioned and pretensioned in relation to the goods to be transported, and fixed against slippage on the goods to be transported.

2. Transport sleeve (1) according to Claim 1, **characterized in that** the at least one traction means (9) is fixed longitudinally and transversely to the pulling direction, and has two mutually spaced-apart devices (11) for receiving a harness system (17), and preferably at least one retaining loop (13), at least on one end.

3. Transport sleeve (1) according to at least one of the preceding claims, **characterized in that** a tensioning element (20) has devices (11) for receiving a harness system (17), wherein the tensioning element (20) runs through tensioning means (21) that are fastened to the link (10) and is fastened to the hood (2), in particular to the devices (11) fastened to the opposite lateral face (4), and runs counter to the direction of the traction means (9) towards the tensioning means (21).

4. Transport sleeve (1) according to at least one of the preceding claims, **characterized in that** the traction means (9) consists at least of two individual traction means which are mutually spaced apart.

5. Transport sleeve (1) according to at least one of the preceding claims, **characterized in that** the link (10) and/or the traction means (9) have/has fastening means (12) for fastening the link (10) and/or the traction means (9) to a lateral face (4), wherein the fastening means (12) absorb predominantly forces acting transversely to the pulling direction of the traction means (9).

6. Transport sleeve (1) according to at least one of the preceding claims, **characterized in that** at least one lateral face (4), in particular all lateral faces (4), and/or the cover face (3) have/has a padding (7), wherein the padding (7) is preferably board-shaped and is in particular a cork board, a rubber board, or a high-expansion foam board.

7. Transport sleeve (1) according to Claim 6, **characterized in that** the lateral faces (4) and/or the cover face (3) have/has receptacles, in particular pockets, for receiving the padding (7) in a retrievable manner.

8. Transport sleeve (1) according to Claim 6, **characterized in that** the padding (7) is permanently connected to the lateral faces (4) and/or the cover face (3), in particular by stitching.

9. Transport sleeve (1) according to at least one of Claims 1 to 6, **characterized in that** the hood (2), due to the tensile force of the traction means (9) when carrying the goods to be transported, is reversibly deformed and pretensioned in relation to the goods to be transported.

10. Transport sleeve (1) according to at least one of Claims 1 to 6, **characterized in that** the hood (2) and/or the link (10) are/is composed of a woven fabric, a flat-knitted fabric, a circular-knitted fabric, and/or a film.

11. Transport device (16) having a transport sleeve (1) according to at least one of the preceding claims, **characterized in that** the transport device (16) has a harness system (17), wherein the harness system (17) in particular has two straps (18), wherein at least one strap (18) preferably has at least two mutually spaced-apart connecting elements (19) for connecting to the devices (11) of the transport sleeve (1).

## Revendications

1. Housse de transport (1), notamment pour des appareils ménagers, présentant un capot (2), le capot (2) présentant une surface de couverture (3), la surface de couverture (3) étant reliée à des surfaces latérales (4) et les surfaces latérales (4) étant reliées entre elles, au moins une surface latérale (4) présentant, à l'extrémité opposée à la surface de couverture (3), au moins une patte (10), au moins un moyen de traction (9) étant fixé à la surface latérale (4) et/ou à la patte (10), notamment pour la mise en place d'un système de sangles de portage (17) et/ou avec une boucle de maintien (13), la patte (10) s'étendant dans la direction de traction de l'au moins un moyen de traction (9) d'une surface latérale (4) à la surface latérale opposée (4) au moins sur la plus grande partie du côté inférieur et dépassant jusqu'à la surface latérale opposée (4) et le capot (2) et la patte (10) étant réalisés de manière flexible au moins par sections,
**caractérisée en ce que** le capot (2) peut être retourné sur le produit à transporter et, pour le transport, la patte (10) peut être passée sous le produit à transporter, de telle sorte que la patte (10) et le moyen de traction (9) s'étendent dans la direction de traction du moyen de traction (9) d'une surface latérale (4) à la surface latérale opposée (4) et, par la force de traction du moyen de traction (9), lors du transport du produit à transporter, le capot (2) est tendu ainsi que précontraint par rapport au produit à transporter et fixé sur le produit à transporter pour éviter qu'il ne glisse.

2. Housse de transport (1) selon la revendication 1, **caractérisée en ce que** l'au moins un moyen de traction (9) est fixé longitudinalement et transversalement à la direction de traction et présente au moins à une extrémité deux dispositifs (11) espacés l'un de l'autre pour recevoir un système de sangles de portage (17) et de préférence au moins une boucle de maintien (13).

3. Housse de transport (1) selon au moins l'une quelconque des revendications précédentes, **caractérisée en ce qu'**un élément de tension (20) présente des dispositifs (11) pour recevoir un système de sangles de portage (17), l'élément de tension (20) passant par des moyens de tension (21) fixés à la patte (10) et étant fixé au capot (2), notamment aux dispositifs (11) fixés à la surface latérale opposée (4), et s'étendant à l'encontre de la direction du moyen de traction (9) vers le moyen de tension (21).

4. Housse de transport (1) selon au moins l'une quelconque des revendications précédentes, **caractérisée en ce que** le moyen de traction (9) est constitué d'au moins deux moyens de traction individuels espacés l'un de l'autre.

5. Housse de transport (1) selon au moins l'une quelconque des revendications précédentes, **caractérisée en ce que** la patte (10) et/ou le moyen de traction (9) présentent des moyens de fixation (12) pour fixer la patte (10) et/ou le moyen de traction (9) sur une surface latérale (4), les moyens de fixation (12) absorbant principalement des forces transversales à la direction de traction du moyen de traction (9).

6. Housse de transport (1) selon au moins l'une quelconque des revendications précédentes, **caractérisée en ce qu'**au moins une surface latérale (4), notamment toutes les surfaces latérales (4), et/ou la surface de couverture (3) présentent un rembourrage (7), le rembourrage (7) étant de préférence en forme de plaque et étant notamment une plaque de liège, une plaque de caoutchouc ou une plaque de mousse légère.

7. Housse de transport (1) selon la revendication 6, **caractérisée en ce que** les surfaces latérales (4) et/ou la surface de couverture (3) présentent des logements, notamment des poches, pour recevoir de manière amovible le rembourrage (7).

8. Housse de transport (1) revendication 6, **caractérisée en ce que** le rembourrage (7) est relié de manière permanente aux surfaces latérales (4) et/ou à la surface de couverture (3), notamment par couture.

9. Housse de transport (1) selon au moins l'une quelconque des revendications 1 à 6, **caractérisée en ce que** la housse (2) est déformée de manière réversible en raison de la force de traction du moyen de traction (9) lors du port du produit à transporter et est précontrainte par rapport au produit à transporter.

10. Housse de transport (1) selon au moins l'une quelconque des revendications 1 à 6, **caractérisée en ce que** la housse (2) et/ou la patte (10) sont constituées d'un tissu, d'un tricot, d'un article à mailles et/ou d'un film.

11. Dispositif de transport (16) avec une housse de transport (1) selon au moins l'une quelconque des revendications précédentes, **caractérisé en ce que** le dispositif de transport (16) présente un système de sangles de portage (17), le système de sangles de portage (17) présentant notamment deux sangles de portage (18), au moins une sangle de portage (18) présentant de préférence au moins deux éléments de liaison (19) espacés l'un de l'autre pour la liaison avec les dispositifs (11) de la housse de transport (1).
